# EUROPÄISCHE PATENTSCHRIFT

(11) **EP 1 143 230 B1**
(45) Veröffentlichungstag und Bekanntmachung des Hinweises auf die Patenterteilung: **19.08.2009**
(21) Anmeldenummer: 01810330.9
(22) Anmeldetag: 02.04.2001
(51) Int. Cl.: G01L 5/00

(54) **Dehnungs- und Kraft-Messwertaufnehmer**
Strain and force measuring device
Capteur de mesure de contraintes et de forces

(30) Priorität: 07.04.2000 CH 696002000
(43) Veröffentlichungstag der Anmeldung: 10.10.2001
(73) Patentinhaber: Baumer Holding AG, 8500 Frauenfeld (CH)
(72) Erfinder: Tanner, Mathias, 8261 Hemishofen (CH)
(74) Vertreter: Breiter, Heinz

(56) Entgegenhaltungen:
- EP-A- 0 892 258
- DE-A- 3 407 620
- US-A- 5 284 062

## Beschreibung

Die Erfindung bezieht sich auf einen Messwertaufnehmer zum elektrischen Messen positiver und negativer Dehnungen und Kräften in Montage-Bohrungen von Strukturen in beliebiger Tiefe, welcher Messwertaufnehmer dehnungs- oder kraftempfindliche elektrische Signale erzeugende, mit wenigstens einem elastischen Teil unterlegte Messelemente, Mittel zum kraftschlüssigen Anpressen der Elemente an der Wandung der Montage-Bohrung, ein Verlängerungsrohr zum Führen der erwähnten Mittel und von Signalkabeln, die zu einer Auswerteelektronik führen, umfasst.

Es sind Messwertaufnehmer bekannt, die mit zylindrischen oder bandförmigen elastischen Körpern einen Anpressdruck erzeugen, der ausreichend ist, dehnungsempfindliche Messelemente kraftschlüssig an eine Bohrungswand zu pressen, wie es z.B. in US-A-5 284 062 offenbart ist. Solche Messwertaufnehmer haben den Nachteil, dass sie nur eine kleine Bohrungstoleranz auszugleichen vermögen, weil das elastische Teil, sobald es zu viel über das Führungsgehäuse hinausgepresst wird, wegzufliessen beginnt. Dieser unerwünschte Vorgang wird durch erhöhte Temperaturen, wie sie im industriellen Umfeld vorkommen, beschleunigt. Zudem besitzen diese Messwertaufnehmer eine nur ungenügende mechanische Begrenzung des Anzugweges, so dass bei nicht sachgemässer Montage die Schutzhülse durch den rohen Anpressdruck gesprengt werden kann.

Der Erfinder hat sich die Aufgabe gestellt, einen Messwertaufnehmer der eingangs genannten Art zu schaffen, der Dehnungen bzw. Kräfte in einer Bohrung in beliebiger Tiefe problemlos messen kann, und damit die vorerwähnten Nachteile beseitigt werden.

Die Aufgabe wird erfindungsgemäss dadurch gelöst, dass die Mittel zum Anpressen der Messelemente zwei an der Basis schwenkbare Schenkel mit einer aussenseitigen Ausfräsung 15 für die elastischen Teile und einem innenseitigen Anzug für einen Keil mit Messelementen umfassen, welcher Keil mittels einer in einer Spannmutter geführten Spindel in Längsrichtung des Verlängerungsrohres verschiebbar ist und eine Spreizbewegung der Schenkel bewirkt. Spezielle und weiterbildende Ausführungsformen der Erfindung sind Gegenstand von abhängigen Patentansprüchen.

Mit dem Messwertaufnehrner können die auf die zu messende Struktur wirkenden dehnungserzeugenden Beanspruchungen und Kräfte direkt gemessen werden.

Die dehnungsempfindlichen Elemente sind vorzugsweise
- Dehnmess-Streifen, welche in axialer oder radialer Richtung, aber auch unter einem Winkel von 45° angeordnet sind, womit sich Längs-, Quer- und Torsionsbeanspruchungen messen lassen, oder
- Piezofolien.

Werden Dehnmess-Streifen mit einem Fischgrat- oder Kreuzmuster eingesetzt, lässt sich auf einfache Art und Weise eine temperaturkompensierte Vollbrücke bilden.

Die erfindungsgemässen Messwertaufnehmer weisen vorzugsweise eine Schutzhülse auf, in welcher zwei federnd gehaltene Schenkel mit den dehnungsempfindlichen Messelementen sowie ein Keil zum Erzeugen des Anpressdruckes untergebracht sind.

Da das elastische Teil in einer Ausfräsung im Schenkel eingelegt ist, kann es nie mehr als durch die Fertigung vorgegeben über das Führungsgehäuse vorstehen, womit der Nachteil des Wegfliessens in jeder Einbausituation dauerhaft vermieden wird.

Die dehnungsempfindlichen Elemente sind vor Umgebungseinflüssen geschützt und können somit mehrmals verwendet bzw. ein- und ausgebaut werden.

Der Anpressdruck der Schenkel ist so stark, dass der ganze Messwertaufnehmer in der Bohrung gehalten wird und somit das Befestigungselement und das dehnungsempfindliche Messelement eine Einheit bilden.

Der Keil ist zweckmässig bezüglich der mechanischen Masse so dimensioniert, dass er beim Erreichen der maximal zulässigen Aufweitung der Schenkel an einem mechanischen Anschlag aufläuft. In umgekehrter axialer Richtung bilden vorteilhaft Nasen an den beiden Schenkeln einen Anschlag, der verhindert, dass der Keil zu weit zurückgedreht und die Schutzhülse zerstört wird.

Dank der vorgesehenen Selbsthemmung des Keils misst der Messwertaufnehmer selbst dann korrekt, wenn infolge ungünstiger Einflüsse die Vorspannung der Spindel ganz nachlassen würde.

Durch eine geeignete Wahl des Keilwinkels kann der Messwertaufnehmer sogar in Bohrungen mit sehr groben Toleranzen angebracht werden, weil diese Toleranzen nicht vom elastischen Teil ausgeglichen werden.

Die Schutzhülse kann mit der Basis der Schenkel verbunden, z. B. verklebt oder verschweisst, sein, womit auch im industriellen Umfeld störungsfrei gemessen werden kann.

Keiner der bisher bekannten Messwertaufnehmer vereinigt alle diese vorteilhaften Eigenschaften in sich.

Der erfindungsgemässe Masswertaufnehmer wird anhand von Ausführungsbeispielen, welche auch Gegenstand von abhängigen Patentansprüchen sind, näher erläutert. Es zeigen schematisch:
- Fig. 1 einen Längsschnitt durch einen Messwertaufnehmer im Einbauzustand,
- Fig. 2 einen Schnitt durch Fig. 1 gemäss der Schnittlinie A-A, und
- Fig. 3 eine Ansicht mit Teilschnitten durch eine Variante des Messwertaufnehmers mit Auswerteelektronik im Einbauzustand.

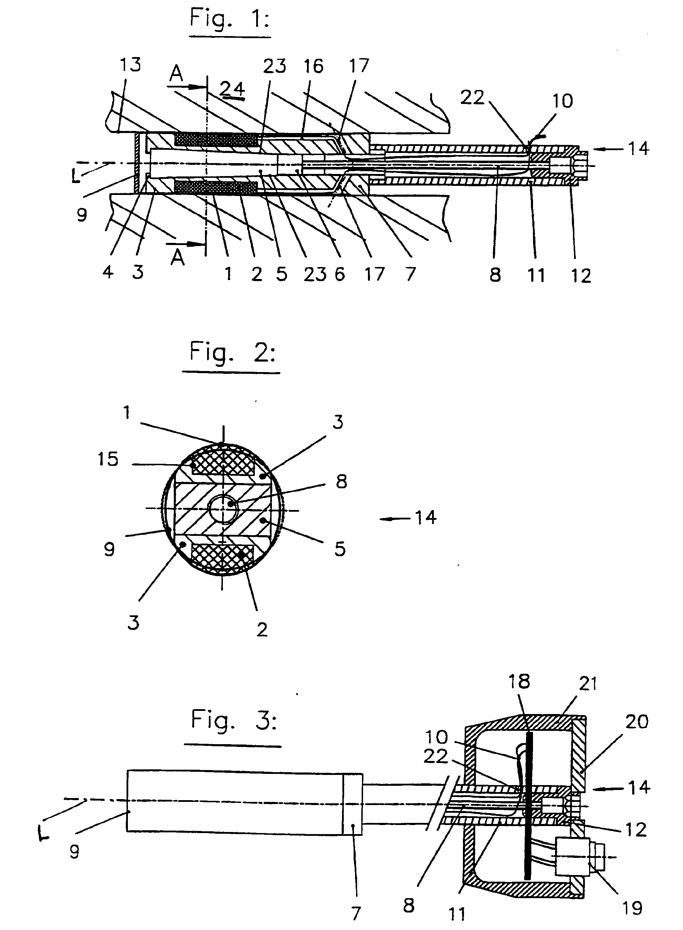

Ein in Fig. 1 und 2 dargestellter Messwertaufnehmer 14 ist eingebaut in einer Montage-Bohrung 13. Diese kann ein Durchgangs- oder Sackloch sein. Der Messwertaufnehmer 14 enthält die federnd gehaltenen Schenkel 3, auf deren Aussenseite in einer Ausfräsung 15 ein überstehendes elastisches Teil 2 mit daraufliegenden dehnungsempfindlichen Messelementen 1 angebracht ist.

Die Schenkel 3 weisen auf ihrer Innenseite einen leichten Anzug 23 auf, der demjenigen eines zugeordneten Keils 5 entspricht. Der Keil 5 ist mit einem zentral angebrachten Gewinde versehen, in welchem eine Spindel 8 eingeschraubt ist. Der Keil 5 besteht aus einem Material, das eine geringe Neigung zur Kaltverschweissung mit dem Material der Schenkel 3 besitzt. Als besonders günstig hat sich Bronze erwiesen. Der Winkel des Keils 5 ist so dimensioniert, dass er selbsthemmend wirkt. Als besonders günstig haben sich Winkel im Bereich von 2 bis 6° bezüglich der Längsachse L der Spindel 8 erwiesen. Dadurch können einerseits noch grössere Bohrungstoleranzen aufgefangen werden, ohne dass die dehnungsempfindlichen Messelemente 1 oder die elastischen Teile 2 mechanisch beansprucht würden, andererseits misst der Messwertaufnehmer 14 dank der Selbsthemmung selbst dann korrekt, wenn die Vorspannung durch die Spindel 8 wegen ungünstiger Einflüsse ganz nachlassen würde.

Der Keil 5 wird mittels der Spindel 8 in axialer Richtung L verschoben. Dadurch vollziehen die Schenkel 3 beim Anziehen eine leichte Spreizbewegung nach aussen, womit die dehnungs- oder kraftempfindlichen Messelemente 1 an eine Schutzhülse 9 gepresst werden. Diese Schutzhülse 9 wird dabei leicht oval verformt und die dehnungs- oder kraftempfindlichen Messelemente 1 schliesslich kraftschlüssig an die Wandung der Montage-Bohrung 13 gepresst. Der Druck auf die dehnungs- oder kraftempfindlichen Messelemente 1 muss so hoch sein, dass zwischen dem Messelement 1, der Schutzhülse 9 und der Bohrungswand eine kraftschlüssige Verbindung entsteht. So können einerseits auf eine Struktur 24 einwirkende, Dehnungen verursachende Kräfte mittels dehnungsempfindlichen Elementen 1 gemessen werden, oder andererseits quer zur Bohrung auftretende Kräfte mit entsprechend angeordneten kraftempfindlichen Messelementen 1 gemessen werden. Gleichzeitig wird durch die Anordnung der Messwertaufnehmer 14 im verspannten Zustand ohne zusätzliche Verspannmechanismen fest in der Montage-Bohrung 13 gehalten. Das Mess- und das Spannelement bilden eine Einheit.

Die Spindel 8 wird mittels einer Spannmutter 12 verspannt. Eine bevorzugte Ausführungsform der Spannmutter 12 weist einen von aussen zugänglichen Innensechskant auf. Eine Nase 4 beschränkt den axialen Verschiebungsbereich des Keils 5.

Signalkabel 10 sind durch Nuten 16 in den Schenkeln 3 und durch Bohrungen 17 in der Basis der Schenkel 3 der Spindel 8 entlang zu einer Auswerteelektronik 18 (Fig. 3) geführt.

In Fig. 2 ist der Mantel der Schutzhülse 9, welche vorzugsweise aus demselben Material wie die Basis 7 der Schenkel 3 besteht, gut erkennbar. Die Schutzhülse 9 verformt sich unter Krafteinwirkung leicht oval. Der Keil 5 ist seitlich nicht rund, sondern flach ausgeführt, was eine verhältnismässig grosse ovale Verformung der Schutzhülse 9 zulässt.

Dadurch kann der Messwertaufnehmer 14 auch in Montage-Bohrungen 13 die mit groben Toleranzen gefertigt sind, eingesetzt werden, was den Nutzen stark erhöht.

Fig. 3 zeigt den Messwertaufnehmer 14 mit verlängerter Spindel 8 und einem Verlängerungsrohr 11. Die elektrischen Kabel 10 sind der Spindel 8 entlang, welche sich nicht drehen kann, zur Auswerteelektronik 18 geführt. Diese wiederum ist mit einem Stecker 19 verbunden.

Die Spannmutter 12 ist einerseits im Verlängerungsrohr 11 frei gelagert und wird andererseits von einem Deckel 20 im Verlängerungsrohr 11 gehalten. In der Spannmutter 12 ist aufnehmerseitig die verlängerte Spindel 8 gelagert, auf der anderen Seite ist ein Schlitz oder, wie eingezeichnet, ein Innensechskant zur Drehmomenteinleitung vorgesehen. Durch Drehen an der Spannmutter 12 kann nun der Messwertaufnehmer 14 in der Montage-Bohrung 13 verspannt werden, wie unter Fig. 1 beschrieben.

Die spezielle Bauform eines Gehäuses 21 erlaubt es, dass die Spindel 8 sich zwangsläufig axial in beide Richtungen L bewegen muss, wenn der an der Spannmutter 12 entsprechend gedreht wird. Dadurch wird der Keil 5 sicher wieder zurückgeschoben, selbst wenn eine Tendenz zum Festsitzen bestehen würde. Somit ist bei dieser Bauform auch der Ausbau des Messwertaufnehmers 14 gewährleistet.

Wenn man das Gehäuse 21 für die Auswerteelektronik 18 sehr klein gestaltet, diese weglässt und die Kabel 10 durch eine radiale Bohrung 22 seitlich abführt, erhält man als Variante einen Messwertaufnehmer 14, welcher sehr kompakt ist, aber noch immer alle vorstehend beschriebenen Vorteile aufweist.

So wird die Möglichkeit geschaffen, dehnungs- oder kraftempfindliche Messelemente mehrmals zu verwenden, in praktisch beliebig tiefen Montage-Bohrungen 13 von Strukturen 24 anzubringen oder durch schrittweises axiales Verschieben innerhalb derselben Bohrung auf einfache Art und Weise die Dehnungsverteilung in axialer Richtung zu bestimmen.

## Patentansprüche

1. Messwertaufnehmer (14) zum elektrischen Messen positiver und negativer Dehnungen und Kräften in Montage-Bohrungen (13) von Strukturen (24) in beliebiger Tiefe, welcher Messwertaufnehmer (14) dehnungs- oder kraftempfindliche elektrische Signale erzeugende, mit wenigstens einem elastischen Teil (2) unterlegte Messelemente (1), Mittel zum kraftschlüssigen Anpressen der Elemente (1) an der Wandung der Montage-Bohrung (13), ein Verlängerungsrohr (11) zum Führen der erwähnten Mittel und von Signalkabein (10), die zu einer Auswerteelektronik (18) führen, umfasst,
**dadurch gekennzeichnet, dass**
die Mittel zum Anpressen der Messelemente (1) zwei an der Basis (7) schwenkbare Schenkel (3) mit einer aussenseitigen Ausfräsung (15) für die elastischen Teile (2) mit Messelementen (1) und einen innenseitigen Anzug (23) für einen Keil (5) umfassen, welcher Keil (5) mittels einer in einer Spannmutter (12) geführten Spindel (8) in Längsrichtung (L) des Verfängerungsrohres (11) verschiebbar ist und eine Spreizbewegung der Schenkel (3) bewirkt.

2. Messwertaufnehmer (14) nach Anspruch 1, **dadurch gekennzeichnet, dass** die Schenkel (3) mit den Messelementen (1) von einer dehnbaren Schutzhülse (9), vorzugsweise aus einem elastisch dehnbaren Metall, umgeben sind, welche mit wenig Spiel in die Montage-Bohrung (13) einschiebbar ist.

3. Messwertaufnehmer (14) nach Anspruch 1 oder 2, **dadurch gekennzeichnet, dass** er durch ein Verlängerungsrohr (11) mit dem Gehäuse (21) einer Auswerteelektronik (18) verbunden ist, von welcher aus Signalkabel (10) durch eine radiale Bohrung (22) des Verlängerungsrohres (11) im Gehäuse (21) in Richtung der Messelemente (1) geführt sind.

4. Messwertaufnehmer (14) nach Anspruch 2 oder 3, **dadurch gekennzeichnet, dass** die Schenkel (3) je eine Nase (4) als Anschlag aufweisen, und die Schutzhülse (9) vorzugsweise mit der Basis der Schenkel (3) dicht verklebt oder verschweisst ist.

5. Messwertaufnehmer (14) nach einem der Ansprüche 2 bis 4, **dadurch gekennzeichnet, dass** die Schutzhülse (9) und die Basis (7) der Schenkel (3) aus demselben Material bestehen, vorzugsweise aus Bronze.

6. Messwertaufnehmer (14) nach einem der Ansprüche 1 bis 5, **dadurch gekennzeichnet, dass** die dehnungsempfindlichen Messelemente (1) Dehnmess-Streifen sind, bevorzugt in axialer oder radialer Richtung oder unter einem Winkel von 45° angeordnet.

7. Messwertaufnehmer (14) nach einem der Ansprüche 1 bis 5, **dadurch gekennzeichnet, dass** die dehnungsempfindlichen Messelemente (1) Piezofolien sind.

8. Messwertaufnehmer (14) nach Anspruch 6 oder 7, **dadurch gekennzeichnet, dass** die als Messelemente (1) verwendeten Dehnmess-Streifen zur Bildung einer temperaturkompensierten Vollbrücke ein Fischgrat- oder Kreuzmuster aufweisen.

9. Messwertaufnehmer (14) nach einem der Ansprüche 1 bis 5, **dadurch gekennzeichnet, dass** die kraftempfindlichen Elemente (1) Piezokristalle sind.

10. Messwertaufnehmer (14) nach einem der Ansprüche 1 bis 9, **dadurch gekennzeichnet, dass** nur bei einem der beiden Schenkel (3) ein Messelement (1) angeordnet ist.

## Claims

1. Measured-value sensor (14) for electrical measurement of positive and negative strains and forces in mounting holes (13) of structures (24) of any desired depth, which measured-value sensor (14) comprises measurement elements (1) which produce strain-sensitive or force-sensitive electrical signals and have at least one elastic part (2) placed underneath them, means for force-fitting pressing of the elements (1) against the wall of the mounting hole (13), an extension tube (11) for guidance of the means that have been mentioned and of signal cables (10) which lead to evaluation electronics (18),
**characterized in that**
the means for pressing the measurement elements (1) comprise two limbs (3), which can pivot on the base (7) and have an internal milled-out area (15) on the outside for the elastic parts (2), with measurement elements (1), and an internal incline (23) for a wedge (5), which wedge (5) can be moved in the longitudinal direction (L) of the extension tube (11) by means of a spindle (8) which is guided in an adjusting nut (12) and results in a spreading movement of the limbs (3).

2. Measured-value sensor (14) according to Claim 1, **characterized in that** the limbs (3) together with the measurement elements (1), are surrounded by an expandable protective sleeve (9), preferably composed of a metal which can expand elastically, which can be inserted into the mounting hole (13) with little play.

3. Measured-value sensor (14) according to Claim 1 or 2, **characterized in that** the sensor (14) is connected through an extension tube (11) to the housing (21) of evaluation electronics (18), from which signal cables (10) are passed through a radial hole (22) in the extension tube (11) in the housing (21) in the direction of the measurement elements (1).

4. Measured-value sensor (14) according to Claim 2 or 3, **characterized in that** the limbs (3) each have a tab (4) as a stop, and the protective sleeve (9) is preferably adhesively bonded or welded in a sealed manner to the base of the limbs (3).

5. Measured-value sensor (14) according to one of Claims 2 to 4, **characterized in that** the protective sleeve (9) and the base (7) of the limbs (3) are composed of the same material, preferably of bronze.

6. Measured-value sensor (14) according to one of Claims 1 to 5, **characterized in that** the strain-sensitive measurement elements (1) are strain gauges, preferably arranged in the axial or radial direction, or at an angle of 45°.

7. Measured-value sensor (14) according to one of Claims 1 to 5, **characterized in that** the strain-sensitive measurement elements (1) are piezo-films.

8. Measured-value sensor (14) according to Claim 6 or 7, **characterized in that** the strain gauges which are used as measurement elements (1) have a herringbone pattern or cruciform pattern in order to form a temperature-compensated full bridge.

9. Measured-value sensor (14) according to one of Claims 1 to 5, **characterized in that** the force-sensitive elements (1) are piezo-crystals.

10. Measured-value sensor (14) according to one of Claims 1 to 9, **characterized in that** a measurement element (1) is arranged close to only one of the two limbs (3).

## Revendications

1. Transducteur de mesure (14) pour la mesure électrique d'extensions et de forces positives et négatives dans des orifices de montage (13) de structures (24) à des profondeurs quelconques, ledit transducteur de mesure (14) comprenant des éléments de mesure (1) placés au-dessous, sensibles à l'extension ou aux forces, qui génèrent des signaux électriques et qui comportent au moins une partie élastique (2), des moyens pour comprimer les éléments (1) par adhérence contre la paroi de l'orifice de montage (13), un tube prolongateur (11) pour guider lesdits moyens et des câbles de signaux (10) qui mènent à une électronique d'interprétation (18),
**caractérisé en ce que**
les moyens pour comprimer les éléments de mesure (1) comprennent deux branches (3) pivotantes au niveau de leur base (7) avec un fraisage (15) côté extérieur pour les parties élastiques (2) munies des éléments de mesure (1) et une dépouille (23) côté intérieur pour une clavette (5), ladite clavette (5) pouvant coulisser dans le sens de la longueur (L) du tube prolongateur (11) au moyen d'une broche (8) guidée dans un écrou de serrage (12) et produisant un mouvement d'écartement des branches (3).

2. Transducteur de mesure (14) selon la revendication 1, **caractérisé en ce que** les branches (3) munies des éléments de mesure (1) sont entourées d'un manchon protecteur (9) extensible, de préférence dans un matériau extensible par effet élastique, lequel peut être inséré avec un faible jeu dans l'orifice de montage (13).

3. Transducteur de mesure (14) selon la revendication 1 ou 2, **caractérisé en ce qu'**il est relié par le biais d'un tube prolongateur (11) avec un boîtier (21) d'une électronique d'interprétation (18) depuis laquelle des câbles de signaux (10) sont guidés à travers une ouverture radiale (22) du tube prolongateur (11) dans le boîtier (21) en direction des éléments de mesure (1).

4. Transducteur de mesure (14) selon la revendication 2 ou 3, **caractérisé en ce que** les branches (3) présentent chacune un tenon (4) faisant office de butée et le manchon protecteur (9) est de préférence collé ou soudé hermétiquement avec la base des branches (3).

5. Transducteur de mesure (14) selon l'une des revendications 2 à 4, **caractérisé en ce que** le manchon protecteur (9) et la base (7) des branches (3) sont constitués du même matériau, de préférence du bronze.

6. Transducteur de mesure (14) selon l'une des revendications 1 à 5, **caractérisé en ce que** les éléments de mesure (1) sensibles à l'extension sont des extensomètres à résistance, disposés de préférence dans le sens axial ou radial ou sous un angle de 45°.

7. Transducteur de mesure (14) selon l'une des revendications 1 à 5, **caractérisé en ce que** les éléments de mesure (1) sensibles à l'extension sont des films piézoélectriques.

8. Transducteur de mesure (14) selon la revendication 6 ou 7, **caractérisé en ce que** les extensomètres à résistance utilisés comme éléments de mesure (1) présentent un modèle à chevrons ou en croix afin de réaliser un pont intégral à compensation de température.

9. Transducteur de mesure (14) selon l'une des revendications 1 à 5, **caractérisé en ce que** les éléments sensibles aux forces (1) sont des cristaux piézoélectriques.

10. Transducteur de mesure (14) selon l'une des revendications 1 à 9, **caractérisé en ce qu'**un élément de mesure (1) n'est disposé que sur une des deux branches (3).
